Europäisches Patentamt

European Patent Office

Office européen des brevets

(11) Numéro de publication : **0 441 686 A1**

# (12) DEMANDE DE BREVET EUROPEEN

(21) Numéro de dépôt : 91400245.6

(22) Date de dépôt : 01.02.91

(51) Int. Cl.⁵ : **F16L 37/08, F16L 37/00, F16L 55/165**

(30) Priorité : 05.02.90 FR 9001310

(43) Date de publication de la demande :
**14.08.91 Bulletin 91/33**

(84) Etats contractants désignés :
**BE GB NL**

(71) Demandeur : SADE- COMPAGNIE GENERALE
DE TRAVAUX D' HYDRAULIQUE SOCIETE
ANONYME
28, rue de la Baume
F-75008 Paris (FR)

(72) Inventeur : Lesauvage, Henri
1, rue Pillore
F-76000 Rouen (FR)
Inventeur : Concedieu, Philippe
191, avenue de la Gare
F-27160 Breteuil-sur-Iton (FR)
Inventeur : Ferrand, Willy
Sente Engrend
F-76160 Darnetal (FR)

(74) Mandataire : Caunet, Jean et al
Cabinet BEAU DE LOMENIE 55, rue
d'Amsterdam
F-75008 Paris (FR)

(54) Dispositif de raccordement étanche de deux éléments identiques de canalisation.

(57)    Chaque élément (1) comporte une extrémité mâle (2) et une extrémité femelle (3) conjuguées prévues pour que l'une du premier élément s'emboîte dans l'autre du deuxième élément en pressant un joint annulaire d'étanchéité.

Selon l'invention, l'extrémité mâle (2) du premier élément (1.i) comporte, sur une partie au moins de son étendue, une portée conique (12) et présente une gorge extérieure (19), tandis que l'extrémité femelle (3) du deuxième élément (1.i+1) comporte, sur une partie au moins de son étendue, un alésage conique (16) et présente une gorge intérieure (20) ; un anneau fendu (21) se place dans lesdites gorges lorsque les extrémités conjuguées précitées sont emboîtées l'une dans l'autre, position dans laquelle un espace libre (22) est ménagé entre lesdits alésage et portée conique ; et le joint torique (23) en matière élastique est logé dans l'espace (22) considéré et entoure la portée conique (12) en s'écrasant contre la paroi (16) de l'alésage.

FIG.3

EP 0 441 686 A1

# DISPOSITIF DE RACCORDEMENT ETANCHE DE DEUX ELEMENTS IDENTIQUES DE CANALISATION

La présente invention concerne un dispositif de raccordement étanche de deux éléments identiques de canalisation.

Ce dispositif s'applique plus particulièrement à la réhabilitation des réseaux d'assainissement. Il s'agit en effet de faire éclater in situ la canalisation existante, en grès par exemple, et de repousser les morceaux brisés dans le terrain afin d'agrandir la section de passage pour mettre en place une nouvelle canalisation, généralement en matière plastique et plus grosse.

Les matériels actuellement mis en oeuvre comportent une tête tractée par un câble dans la canalisation existante et procédant pour l'éclater et l'élargir de différentes façons. La tête traîne derrière elle une nouvelle canalisation qui est constituée par des éléments identiques relativement courts descendus dans un regard et raccordés bout à bout l'un après l'autre au fur et à mesure que ladite canalisation ainsi constituée avance.

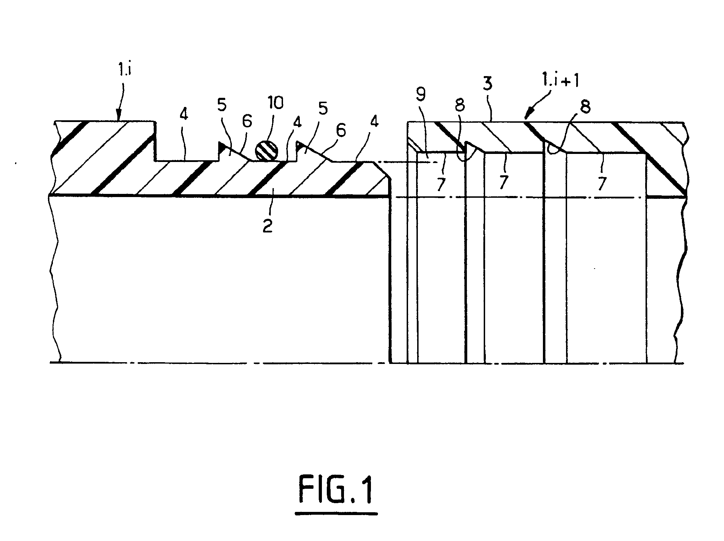

Comme le montre la figure 1 du dessin annexé, chacun des éléments 1 comporte une extrémité mâle 2 et une extrémité femelle 3 conjuguées entre elles. L'extrémité mâle 2 d'un élément 1 coopère par emboîtement avec l'extrémité femelle 3 de l'élément suivant 1.i+1. L'extrémité mâle 2 présente une portée cylindrique 4 munie de saillies annulaires 5 de section triangulaire dont le flanc pentu 6 converge vers le bout. L'extrémité femelle 3 délimite un alésage également cylindrique 7 ayant en creux des gorges 8 de section complémentaire à celle des saillies précitées 5. Le diamètre intérieur de l'alésage 7 est supérieur au diamètre extérieur de la portée 4 de façon qu'il subsiste entre eux, lorsque les extrémités 2 et 3 sont emboîtées l'une dans l'autre et que les saillies 5 pénètrent dans les gorges 8, un espace libre 9. Par ailleurs, un joint torique 10 en matière élastique entoure la portée 4 entre deux saillies 5 et est destiné à être comprimé contre la paroi de l'alésage 7 pour assurer l'étanchéité de la jonction.

Si les éléments 1 ne sont pratiquement pas déformés, en ovalisation par exemple, et s'ils sont bien alignés, le dispositif de raccordement est efficace. Il transmet bien la traction de l'un des éléments qu'il relie à l'autre et assure l'étanchéité de la jonction.

Par contre, ce dispositif de raccordement connu s'avère à l'usage inapte à s'adapter aux défauts d'ovalisation et d'alignement, à transmettre dans ces conditions la traction de la tête grâce à laquelle la nouvelle canalisation pénètre dans la canalisation existante et à assurer l'étanchéité de la jonction de façon durable.

La présente invention a pour but de remédier à ces inconvénients en proposant un dispositif de raccordement perfectionné qui s'adapte parfaitement aux défauts d'ovalisation et d'alignement des éléments de canalisation, qui transmet sans défaillance la force de traction d'un élément au suivant pour les faire pénétrer dans la canalisation existante et qui assure l'étanchéité en toutes circonstances et de façon durable.

Dans ce but, le perfectionnement de l'invention s'applique à un dispositif de raccordement étanche de deux éléments identiques de canalisation dont chacun comporte une extrémité mâle et une extrémité femelle conjuguées prévues pour que l'une du premier élément s'emboîte dans l'autre du deuxième élément en pressant un joint annulaire d'étanchéité.

Conformément à l'invention, l'extrémité mâle du premier élément comporte, sur une partie au moins de son étendue, une portée conique et présente une gorge extérieure à flancs droits, tandis que l'extrémité femelle du deuxième élément comporte, sur une partie au moins de son étendue, un alésage conique et présente une gorge intérieure à flancs droits ; un anneau fendu se place dans lesdites gorges lorsque les extrémités conjuguées précitées sont emboîtées l'une dans l'autre, position dans laquelle un espace libre est ménagé entre lesdits alésage et portée coniques ; un joint torique en matière élastique est logé dans l'espace considéré et entoure la partie conique en s'écrasant contre la paroi de l'alésage, tout en permettant par une augmentation ou une diminution de diamètre et d'épaisseur, un déplacement radial, un déplacement angulaire et une ovalisation des deux extrémités.

L'alésage conique de l'extrémité femelle peut aboutir sur un épaulement pouvant constituer une butée d'arrêt pour l'extrémité mâle conjuguée.

Suivant une forme de réalisation particulièrement avantageuse, la gorge extérieure débouche sur une portée cylindrique prolongeant la partie conique de l'extrémité mâle et la gorge intérieure débouche dans un alésage cylindrique prolongeant l'alésage conique, un espace étant également ménagé entre cet alésage cylindrique et la portée cylindrique conjuguée lorsque les extrémités correspondantes sont emboîtées l'une dans l'autre.

Divers autres caractéristiques et avantages de l'invention ressortent d'ailleurs de la description détaillée qui suit.

Une forme de réalisation de l'objet de l'invention est représentée, à titre d'exemple non limitatif, sur le dessin annexé.

Sur ce dessin, outre la figure 1 précitée qui est une coupe longitudinale partielle d'un dispositif de raccordement connu :

    – la figure 2 est une coupe longitudinale arrachée montrant le dispositif de raccordement de l'invention avant emboîtement ;

– la figure 3 est une vue partielle analogue à la figure 2, illustrant le même dispositif après emboîtement.

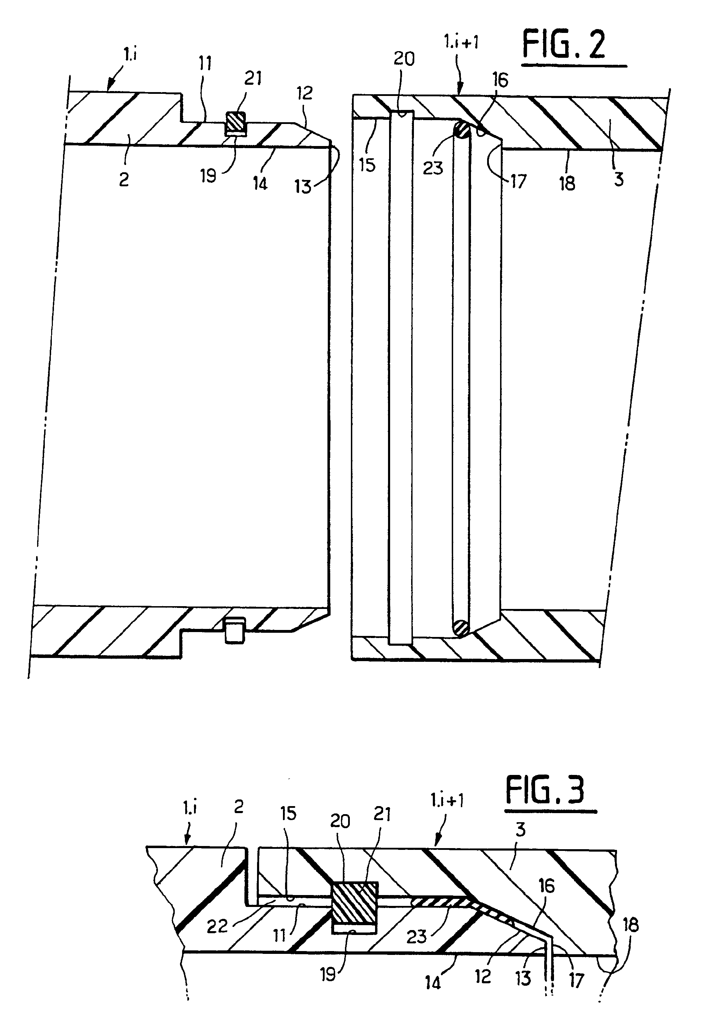

Ainsi que cela ressort des figures 2 et 3, l'extrémité mâle 2 de l'élément 1.i comporte une portée cylindrique 11 prolongée par une portée conique 12 reliée par un bout coronal 13 à la surface intérieure 14 de cet élément 1.i. L'extrémité femelle 3 de l'élément 1.i+1 délimite un alésage cylindrique 15 prolongé par un alésage conique 16 relié par un épaulement 17 à la surface intérieure 18 dudit élément 1.i+1.

Des gorges 19 et 20 sont ménagées dans la portée cylindrique 11 pour déboucher à l'extérieur et, respectivement, dans l'alésage cylindrique 15 pour déboucher à l'intérieur. Lorsque les extrémités 2 et 3 sont emboîtées l'une dans l'autre, les gorges sont situées en regard. Ces gorges sont destinées à recevoir un anneau fendu 21, dénommé habituellement circlip, destiné à assurer l'attelage des deux éléments 1.i et 1.i+1.

Dans cette position, et bien que cela ne soit pas représenté sur la figure 3, le bout 13 peut buter contre l'épaulement 17.

Comme le montre cette figure 3, un espace libre 22 est ménagé entre les portées 11, 12 et les alésages 15, 16, de façon que les éléments puissent "jouer" l'un par rapport à l'autre lors de leur introduction dans la canalisation existante fracturée. Les éléments "jouent" en se déformant par ovalisation et/ou en se désalignant.

Afin de permettre le montage de l'anneau fendu d'attelage 21, la gorge 19 est suffisamment profonde pour que ledit anneau rétracté s'y loge aisément sans toucher à la paroi 15. Après enfoncement de l'extrémité mâle 2 dans l'extrémité femelle 3 jusqu'à ce que le bout 13 bute contre l'épaulement 17, l'anneau 21 se détend et pénètre dans la gorge 20.

Par ailleurs, un joint torique 23 est interposé entre l'extrémité mâle 2 et l'extrémité femelle 3. Son diamètre intérieur au repos est inférieur au diamètre extérieur de la portée cylindrique 11 de l'extrémité mâle. Par suite, ce joint ne peut prendre place au repos qu'autour de la portée conique 12 de cette extrémité mâle ou contre la paroi de l'alésage conique 16 de l'extrémité femelle.

Lors de l'enfoncement précité des extrémités mâle 2 et femelle 3 l'une dans l'autre, le joint 23 s'écrase entre les parties coniques 12 et 16 et flue dans l'espace tubulaire 22 ménagé (figure 3) entre les parties cylindriques 11 et 15. Ce joint améliore alors la jonction en assurant une étanchéité parfaite et en permettant une compensation élastique des déformations (ovalisation, désalignement ...).

Dans la forme de réalisation décrite, les éléments tubulaires 1 sont en matière plastique. L'anneau fendu 21 peut être en polyéthylène haute densité ou en polychlorure de vinyle et le joint torique 23 en néoprène.

**Revendications**

1. Dispositif de raccordement étanche de deux éléments identiques de canalisation (1), chaque élément (1) comportant une extrémité mâle (2) et une extrémité femelle (3) conjuguées prévues pour que l'une du premier élément s'emboîte dans l'autre du deuxième élément en pressant un joint annulaire d'étanchéité, caractérisé :

   – en ce que l'extrémité mâle (2) du premier élément (1.i) comporte, sur une partie au moins de son étendue, une portée conique (12) et présente une gorge extérieure (19) à flancs droits, tandis que l'extrémité femelle (3) du deuxième élément (1.i+1) comporte, sur une partie au moins de son étendue, un alésage conique (16) et présente une gorge intérieure (20) à flancs droits,

   – en ce qu'un anneau fendu (21) se place dans lesdites gorges lorsque les extrémités conjuguées précitées sont emboîtées l'une dans l'autre, position dans laquelle un espace libre (22) est ménagé entre lesdits alésage et portée coniques,

   – et en ce que le joint torique (23) en matière élastique est logé dans l'espace (22) considéré et entoure la partie conique (12) en s'écrasant contre la paroi (16) de l'alésage, tout en permettant par une augmentation ou une diminution de diamètre et d'épaisseur, un déplacement radial, un déplacement angulaire et une ovalisation des deux extrémités (2) et (3).

2. Dispositif selon la revendication 1, caractérisé en ce que l'alésage conique (16) de l'extrémité femelle (3) aboutit sur un épaulement (17) pouvant constituer une butée d'arrêt pour l'extrémité mâle conjuguée (2).

3. Dispositif selon la revendication 1 ou 2, caractérisé en ce que la gorge extérieure (19) débouche sur une portée cylindrique (11) prolongeant la partie conique (12) de l'extrémité mâle (2) et la gorge intérieure (20) débouche dans un alésage cylindrique (15) prolongeant l'alésage conique (16), un espace (22) étant également ménagé entre cet alésage cylindrique et la portée cylindrique conjuguée lorsque les extrémités correspondantes sont emboîtées l'une dans l'autre.

## FIG.1

FIG.2

FIG.3

EP 0 441 686 A1

**Office européen des brevets**

# RAPPORT DE RECHERCHE EUROPEENNE

Numero de la demande

EP 91 40 0245

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3 010 459 (RICHTER) <br> * Figure 1 * <br> --- | 1,2,3 | F 16 L 37/08 <br> F 16 L 37/00 <br> F 16 L 55/165 |
| A | US-A-3 718 350 (KLEIN) <br> * Figures 1,2 * <br> --- | 1,2,3 | |
| A | DE-A-1 500 753 (FRANK) <br> * Figure 3 * <br> --- | 1,2,3 | |
| A | GB-A-2 166 826 (YARNELL) <br> * Page 1, lignes 26-59; fig. * <br> ----- | 1,2,3 | |

**DOMAINES TECHNIQUES RECHERCHES (Int. Cl.5)**

F 16 L

Le présent rapport a été établi pour toutes les revendications

| Lieu de la recherche | Date d'achèvement de la recherche | Examinateur |
|---|---|---|
| LA HAYE | 19-03-1991 | HUBEAU M.G. |